Europäisches Patentamt

European Patent Office

Office européen des brevets

(19)

(11) Veröffentlichungsnummer: **0 359 056**

**A2**

## EUROPÄISCHE PATENTANMELDUNG

(21) Anmeldenummer: 89116151.5

(22) Anmeldetag: 31.08.89

(51) Int. Cl.⁵: **G06F 11/16**

(30) Priorität: 13.09.88 US 243573

(43) Veröffentlichungstag der Anmeldung:
21.03.90 Patentblatt 90/12

(84) Benannte Vertragsstaaten:
AT BE CH DE ES FR GB IT LI NL

(71) Anmelder: Siemens Aktiengesellschaft
Wittelsbacherplatz 2
D-8000 München 2(DE)

(72) Erfinder: Bauer, Willi
Planstrasse 20
D-7527 Kraichtal-Ööh(DE)
Erfinder: Büsch, Wilfried
Im Krautgarten 17
D-6744 Kandel(DE)
Erfinder: Heck, Rolf
Bahnhofstrasse 14 a
D-7555 Bietigheim(DE)
Erfinder: Klein, Klaus
Im Kirchbühl 3
D-7512 Rheinstetten 1(DE)
Erfinder: Schmitt, Reinhard
Horstring 22
D-6740 Landau(DE)

(54) **Aufbauanordnung für eine modulare ausfallsichere Datenverarbeitungsanlage.**

(57) Die Erfindung bezieht sich auf eine Aufbauanordnung für eine modulare ausfallsichere Datenverarbeitungsanlage. Bei der ausfallsicheren Datenverarbeitungsanlage sind die Baugruppen bzw. Bauelemente redundant aufgebaut. Um den redundanten Betrieb zu gewährleisten, sind funktionsfähige Teile der Datenverarbeitungsanlage so zusammenhängend angeordnet und über Monitorleitungen mit anderen Teilen verbunden, daß Servicefunktionen, wie Kühlung und Stromversorgung, auch bei einer Veränderung der Anlage oder Fehlfunktionen erhalten bleiben.

Die Erfindung ist vor allem in Datenverarbeitungsanlagen in der Automatisierungstechnik anwendbar.

FIG 1

EP 0 359 056 A2

## Aufbauanordnung für eine modulare ausfallsichere Datenverarbeitungsanlage

Die Erfindung betrifft eine Aufbauanordnung für eine modulare ausfallsichere Datenverarbeitungsanlage gemäß dem Oberbegriff des Anspruchs 1.

Bei einer bekannten Datenverarbeitungsanlage (E-A-0 184 657), die eine Vielzahl von mehreren jeweils annähernd gleich aufgebauten Prozessorkarten, Speicherkarten und sonstigen Baugruppen aufweist, sind die jeweils gleichen Baugruppen zusammengefaßt in einem Gehäusebereich der Datenverarbeitungsanlage untergebracht. Bei einer Störung in einem Bereich des Gehäuses, beispielsweise durch Ausfall eines Teils der Lüftung, ist daher nicht sichergestellt, daß ein funktionsfähig zusammenhängender Teil der Datenverarbeitungsanlage einen weiteren Betrieb ermöglicht.

Es soll eine Datenverarbeitungsanlage geschaffen werden, die im mechanischen und elektrischen Aufbau so ausgelegt ist, daß während einer Beseitigung von Störungen und bei einer Neukonfiguration mindestens ein voll funktionsfähiger Teil der Datenverarbeitungsanlage gebildet ist, für den die Stromversorgung, die Kühlung und sämtliche Anschlüsse an periphere Bausteine gewährleistet sind.

Die Erfindung wird bei einer Datenverarbeitungsanlage der eingangs genannten Art mit den Merkmalen des Anspruchs 1 gelöst. Vorteilhafte Ausführungsformen sind in den Unteransprüchen angegeben.

Durch den klar gegliederten Aufbau der Baugruppen im Gehäuse ist in vorteilhafter Weise ein Bereich hinsichtlich Verdrahtung, Kühlung, Steckanordnung immer so angeordnet, daß für einen voll funktionsfähigen Teil die optimalen Betriebsbedingungen herrschen, auch wenn Baugruppen aus der Anlage herausgenommen werden. Somit ist ein sogenannter Non-Stop-Betrieb weitgehend gewährleistet.

Es sind kompakte Steckeranordnungen auf speziellen Leiterplatten vorgesehen, die beispielsweise einen Austausch von Baugruppen ohne Behinderung des jeweils funktionsfähigen Bereichs gestatten.

Es sind eine Anzahl Stromversorgungsbausteine vorhanden, die mechanisch voneinander getrennt und elektromagnetisch gegeneinander abgeschirmt sind, so daß jeweils ein funktionsfähiger Stromversorgungsbaustein die Anlage versorgt, während andere Stromversorgungsbausteine ausgewechselt werden können. Auch eine einfache Umrüstung, besonders eine Hochrüstung auf eine höhere Ausbaustufe der Datenverarbeitungsanlage, ist ohne Eingriffe in die laufende Anlage möglich. Zur Verteilung der Stromversorgungsleitungen ist in vorteilhafter Weise eine Stromversorgungsleiterplatte vorhanden, die sich in ihren Ausmaßen nahezu über eine Seitenfläche des Gehäuses der Datenverarbeitungsanlage erstreckt und Steckeranordnungen in den Bereichen der anzuschließenden Bausteine aufweist. Über diese Leiterplatte kann nicht nur die Spannungsversorgung, sondern es können auch Signalleitungen für Sensoren etc. und gegebenenfalls Datenverbindungen in der Anlage verteilt bzw. nach außen geführt werden.

Es ist ein Kühlsystem mit zwei Lüftern vorhanden, das Kühlluft für die Stromversorgung, den Baugruppenträger für die Computerbaugruppen und für die Ein-/Ausgangsbaugruppen erzeugt, und es ist ein weiteres vollkommen autarkes Kühlsystem mit zwei Lüftern für die im Frontbereich der Datenverarbeitungsanlage angeordneten Peripheriesysteme, wie Speicherlaufwerke, die von außen bedienbar sein müssen, vorhanden. Ein separater Luftkanal für das zweite Kühlsystem befindet sich in vorteilhafter Weise im Deckel der Datenverarbeitungsanlage und führt Luft von hinten an dieses Kühlsystem heran. Die Kühlsysteme und die Luftströme sind so angeordnet, daß sie sich gegenseitig nicht behindern.

Hinsichtlich der elektromagnetischen Abschirmungen der elektrischen Teile sind sowohl die Bausteine untereinander als auch die gesamte Anordnung in aus wenigen gebogenen Blechteilen gebildeten Gehäusen untergebracht, die Durchlaßöffnungen für Kühlluft, Bedienelemente und elektrische Verbindungen aufweisen. Das Gehäuse wird außen mit großflächigen Kunststoffteilen vervollständigt, die über Einrastverbindungen in Kombination mit wenigen unverlierbar gehaltenen Schrauben befestigt werden.

Im hinteren Teil des Gehäuses der Datenverarbeitungsanlage sind Baugruppen für die Ein-/Ausgangskopplung angeordnet, wobei in der beschriebenen Ausführungsform maximal vier Baugruppenträger mit jeweils maximal vierzehn Schnittstellen anbringbar sind. Diese Baugruppenträger zur Aufnahme von maximal vier Baugruppen sind modular steckbar, haben Luftzuführöffnungen und sind über Steckverbindungen mit dem Computersystem und der Stromversorgung verbindbar. Es ist somit auch in diesem Bereich ein Austausch oder eine Reparatur von Baugruppen im sogenannten Non-Stop-Betrieb möglich.

Ebenfalls im hinteren Bereich des Gehäuses befinden sich Netzversorgungsteile, die den wechselfrequenten Bereich der Stromversorgung darstellen, und gepufferte Batterien für die Notstromversorgung. Auch diese Bausteine sind modular in entsprechenden Einschubfächern untergebracht und somit leicht austauschbar sowie bei Non-Stop-Betrieb jeweils zweifach ausgeführt.

Bei einer zweifachen redundanten Ausführung der Bausteine und Baugruppen der Anlage sind die jeweils redundanten Teile symmetrisch angeordnet, so daß auch eine einfache geometrische Zuordnung der Kühlluftströme und der elektrischen Verbindungen zu den Teilen und eine einfache Reparatur möglich ist.

Die Erfindung wird anhand der Figuren erläutert, wobei

Figur 1 eine Explosionsdarstellung eines Ausführungsbeispiels einer Datenverarbeitungsanlage,

Figur 2 eine schematische Skizze von Bausteinen und Baugruppen,

Figur 3 eine Detailskizze der Anordnung von Luftdrucksensoren zur Überwachung der Kühlsysteme und

Figur 4 eine Prinzipskizze von selbständigen Funktionsteilen in der Datenverarbeitungsanlage darstellt.

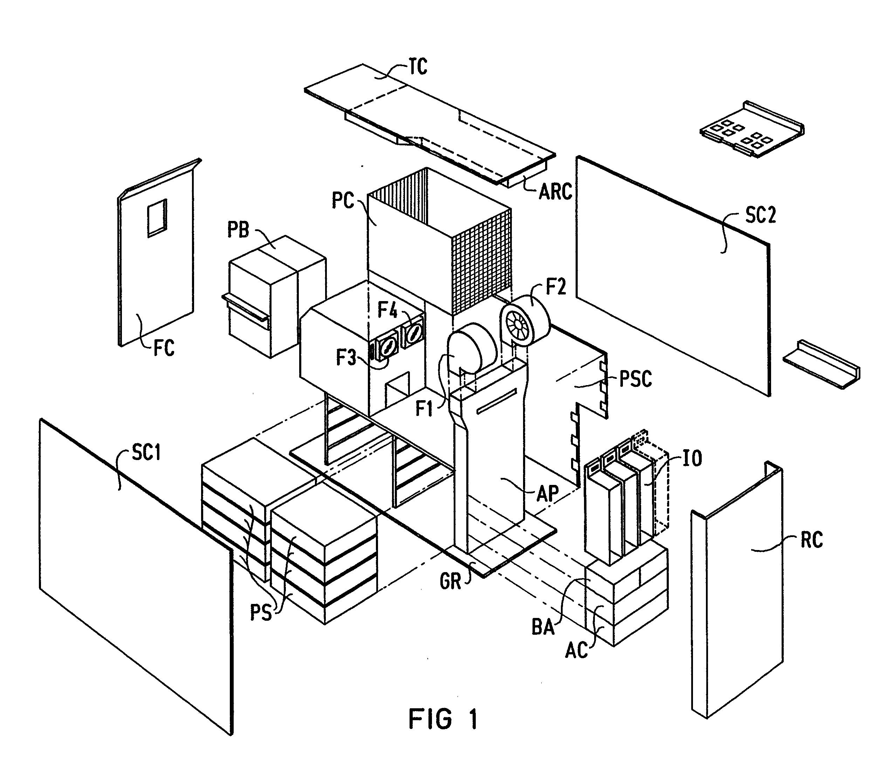

Bei der Explosionsdarstellung nach der Figur 1 sind um einen zentralen Gehäuserahmen GR Stromversorgungsbausteine PS, Netzversorgungsbausteine AC, Batteriemodule BA, Baugruppenträger für Ein-/Ausgangsbaugruppen IO, Baugruppenträger für Prozessorbaugruppen PC, Aufnahmeboxen PB für periphere Systeme, eine Stromversorgungsleiterplatte PSC und jeweils Lüfter F1, F2 für ein erstes Kühlsystem und Lüfter F3, F4 für ein zweites Kühlsystem vorhanden. Das Gehäuse wird abgeschlossen mit Seitenwänden SC1 und SC2 einer Rückwand RC und einer Frontwand FC. In einem Deckel TC ist ein Luftkanal ARC zur Versorgung des zweiten Kühlsystems mit Kühlluft von der Rückseite untergebracht, und es ist ein Luftkanal AP für das erste Kühlsystem vorhanden, durch das die Kühlluft aus dem hinteren Bereich angesaugt wird und zunächst durch den Baugruppenträger PC für die Prozessorbaugruppen und dann nach einer zweimaligen Umlenkung durch die Stromversorgungsbaugruppen PS gedrückt wird. Weiterhin sind Luftschlitze für den Baugruppenträger IO für die Ein-/Ausgangsbaugruppen vorhanden.

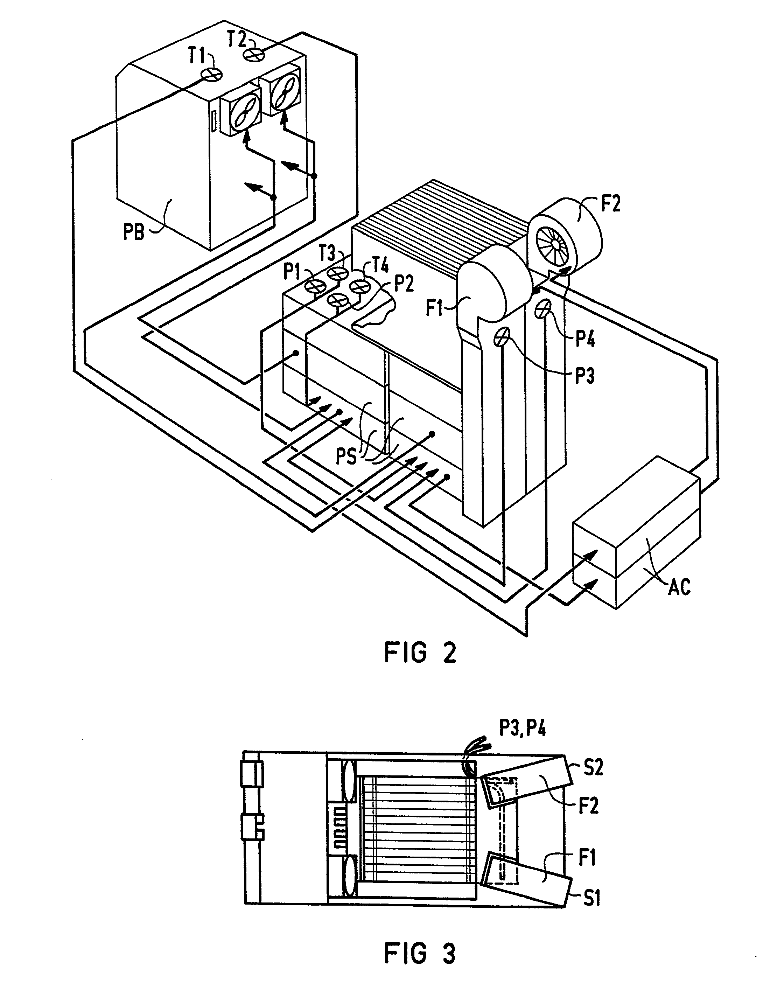

Die in der Figur 2 dargestellten Blöcke des Ausführungsbeispiels der Datenverarbeitungsanlage stimmen mit denen nach der Figur 1 überein. Auf den Aufnahmeboxen PB sind Temperatursensoren T1 und T2 angebracht, die hier über Signalleitungen an die Stromversorgungsbausteine PS angeschlossen sind. Im Bereich der Stromversorgungsbausteine PS sind Temperatursensoren T3 und T4 sowie Luftdrucksensoren P1 und P2 vorhanden. Der Temperatursensor T4 und der Luftdrucksensor P1 sind über eine Signalleitung an einen der Stromversorgungsbausteine PS und der Temperatursensor T3 und der Luftdrucksensor P2 sind über eine weitere Signalleitung an einen weiteren Stromversorgungsbaustein PS angeschlossen. Weitere Luftdrucksensoren P3 und P4 sind jeweils im Bereich der Lüfter F1 und F2 angeordnet. Oberhalb der Stromversorgungsbausteine PS und im direkten Anblasbereich der Lüfter F1 und F2 ist der Baugruppenträger PC angeordnet, welcher die hier nicht näher dargestellten elektronischen Schaltungen, wie Prozessor- und Speicherbaugruppen etc., enthält. Bei dieser Anordnung ist gewährleistet, daß jeweils ein Lüftungsbereich eines der Lüfter F1 und F2 einen funktionsfähigen Teil einer Datenverarbeitungsanlage belüftet und über die in diesen Bereichen angebrachten Temperatur- und Luftdrucksensoren eine Überwachung der für die elektronischen Bauteile notwendigen Umgebungsverhältnisse durchgeführt wird. Die Stromversorgungsbausteine enthalten hier nicht näher dargestellte Systemunterstützungsschaltungen, die bei einer Abweichung von den geforderten Randbedingungen ein Abschalten von Baugruppen oder Laufwerken bzw. ein Umschalten der Lüfterbausteine ermöglichen.

Die Figur 3 zeigt eine Draufsicht auf das Gehäuse mit den Lüftern F1 und F2, an die die Schlauchenden S1 und S2 herangeführt sind. Am anderen Ende der Schlauchleitungen befinden sich die Luftdrucksensoren P3 und P4. Die zur Kühlung der Datenverarbeitungsanlage eingesetzten Lüfter F1 und F2 werden mittels der Luftdrucksensoren P3 und P4 auf ordnungsgemäße Funktion überwacht. Die Luftdrucksensoren P3, P4 messen den Luftdruck der Lüfter F1, F2 mittels der Schlauchleitung mit den Schlauchenden S1, S2 direkt am Luftaustritt der Lüfter F1, F2. Die Luftdrucksensoren P3, P4 sind beispielsweise als Schalter ausgeführt, so daß direkt ein digitales Signal für die weitere Informationsverarbeitung in der Datenverarbeitungsanlage zur Verfügung steht. Im Falle eines Defektes an einem der Lüfter F1, F2, der zur Reduzierung der Kühlluft und damit zu einem Schaden an der Datenverarbeitungsanlage führen kann, wird der Fehler durch Abfallen des Luftdrucks am Luftauslaß des Lüfters über den Luftdrucksensor P3, P4 festgestellt und ein Alarm an die Datenverarbeitungsanlage gegeben.

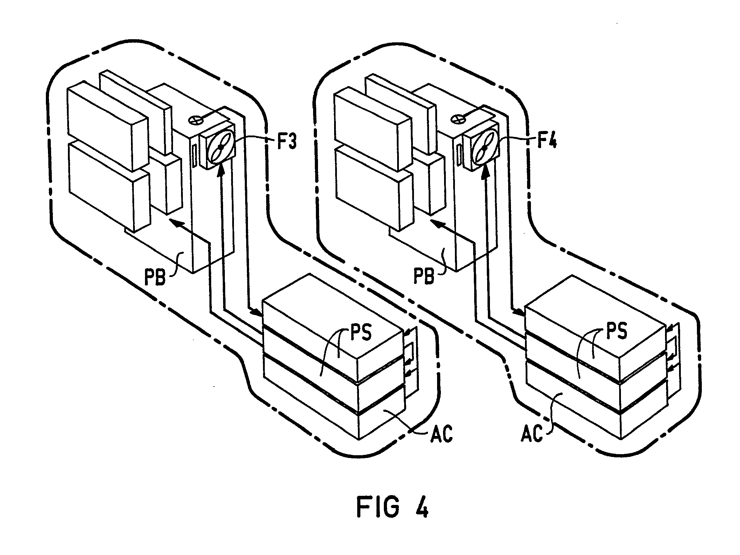

In der Figur 4 sind die jeweils für sich voll funktionsfähigen Teile der Datenverarbeitungsanlage strichpunktiert dargestellt, die jeweils im Bereich eines der Lüfter F3 und F4 angeordnet sind. Hier sind somit ein Stromversorgungsbaustein PS und ein Wechselspannungsbaustein AC zur Versorgung einer Aufnahmebox PB mit Speicherlaufwerken vorgesehen. Im Falle eines Ausfalls des anderen Bereichs, beispielsweise aufgrund einer Störung, wäre dieser erste Bereich somit voll funktionsfähig und könnte zumindest einen großen Teil der Leistung der Datenverarbeitungsanlage für den weiteren Betrieb sicherstellen.

## Ansprüche

1. Aufbauanordnung für eine modulare ausfallsichere Datenverarbeitungsanlage
- mit einer Vielzahl von Bausteinen und Baugruppen, die jeweils bestimmte Funktionen erfüllen, **dadurch gekennzeichnet, daß**
- jeweils ein für sich voll funktionsfähiger Teil der Datenverarbeitungsanlage geometrisch so zusammenhängend angeordnet und über Monitorleitungen mit den anderen Teilen verbunden ist, daß alle Servicefunktionen, wie Kühlung, Stromversorgung und Überwachung, auch bei einer Veränderung der Anlage oder bei Fehlfunktion, wie z. B. Ausfall, Reparatur von Bausteinen oder Baugruppen, für den voll funktionsfähigen Teil aufrechterhalten sind.

2. Aufbauanordnung nach Anspruch 1, **dadurchgekennzeichnet** daß - zwei voneinander unabhängige Kühlsysteme vorhanden sind, von denen das erste für den Zentralbereich der Anlage mit den Stromversorgungsbausteinen, den Prozessor- und den Ein-/Ausgangsbaugruppen und das zweite für das im Frontbereich angebrachte Peripheriesystem zuständig ist, - wobei ein Luftkanal für das zweite Kühlsystem vom hinteren Bereich des Gehäuses der Datenverarbeitungsanlage zu den Lüftern geführt ist.

3. Aufbauanordnung nach Anspruch 2, **dadurch gekennzeichnet, daß**
- in beiden Kühlsystemen jeweils zwei symmetrisch angeordnete Lüfter vorhanden sind, die hinsichtlich der Energieversorgung voneinander unabhängig sind, und daß
- im ungestörten Betriebsfall jeder Lüfter den zugehörigen Bereich in der Datenverarbeitungsanlage kühlt und bei Ausfall eines Lüfters der jeweils andere durch Leistungserhöhung die Kühlung der gesamten Datenverarbeitungsanlage vornimmt.

4. Aufbauanordnung nach Anspruch 2 oder 3, **dadurch gekennzeichnet, daß**
- mindestens ein Luftdrucksensor zur Detektion eines Ausfalls eines der Kühlsysteme vorhanden ist und daß
- die Luftdrucksensoren an einem Ende einer Schlauchleitung angeordnet sind, deren anderes Ende sich am jeweiligen Luftaustritt der Lüfter der Kühlsysteme befindet.

5. Aufbauanordnung nach einem der vorhergehenden Ansprüche, **dadurch gekennzeichnet, daß**
- alle Bausteine und Baugruppen in elektromagnetisch abschirmenden Gehäusen aus gebogenen Blechteilen untergebracht sind, die modular steckbar am Gehäuse gehalten sind und über eine zentrale Stromversorgungsleiterplatte und über ein zentrales Datenbussystem versorgt werden.

6. Aufbauanordnung nach einem der vorhergehenden Ansprüche, **dadurch gekennzeichnet,** daß
- bei einer im Non-Stop-Betrieb arbeitenden Datenverarbeitungsanlage alle Bausteine und Baugruppen zweifach vorhanden sind und die jeweils eine Baugruppe oder der jeweils eine Baustein ohne mechanische oder elektrische Beeinflussung der jeweils anderen Baugruppe austauschbar bzw. entfernbar ist.

P 7441 E

FIG 1

P 7441 E

FIG 2

FIG 3

P 7441 E

FIG 4